Europäisches Patentamt

European Patent Office

Office européen des brevets

(19)

(11) Publication number: **0 143 804**
**B1**

## (12) EUROPEAN PATENT SPECIFICATION

(45) Date of publication of patent specification: **27.07.88**

(51) Int. Cl.⁴: **F 16 B 7/22**

(21) Application number: **84901581.3**

(22) Date of filing: **16.04.84**

(86) International application number:
**PCT/DK84/00030**

(87) International publication number:
**WO 84/04139 25.10.84 Gazette 84/25**

## (54) A COUPLING DEVICE FOR HOLLOW STRUCTURAL MEMBERS.

(30) Priority: **15.04.83 DK 1647/83**
**27.02.84 DK 1076/84**

(43) Date of publication of application:
**12.06.85 Bulletin 85/24**

(45) Publication of the grant of the patent:
**27.07.88 Bulletin 88/30**

(84) Designated Contracting States:
**AT BE CH DE FR GB LI LU NL SE**

(56) References cited:
**DE-A-1 475 048**
**DE-A-2 108 342**
**DE-B-2 239 370**
**FR-A-2 152 941**
**US-A-3 574 367**
**US-A-3 969 031**

(73) Proprietor: **Aktieselskabèt Laur. Knudsen**
**Nordisk Elektricitets Selskab**
**Haraldsgade 53**
**DK-2100 Kopenhagen O (DK)**

(72) Inventor: **PEDERSEN, Kurt, Flemming,**
**Lindegaard**
**Hjortespringet 1**
**DK-3400 Hillerod (DK)**

(74) Representative: **Vossius & Partner**
**Siebertstrasse 4 P.O. Box 86 07 67**
**D-8000 München 86 (DE)**

EP 0 143 804 B1

Courier Press, Leamington Spa, England.

## Description

The invention relates to a coupling device for obtaining a joint between the end of a first hollow member and the side of a second hollow member.

Various coupling devices for joining a vertical hollow member and the end of a horizontal cross member are known. Butt straps are common and are mounted on the outside of the hollow members and bolted thereto. Furthermore sleeve couplings are known, the sleeves of which are mounted on the horizontal cross members, which sleeves carry parts that may be placed in holes in the vertical member. The sleeve couplings act as levers which expand the parts placed in the vertical member outwards when the sleeves are tightened against the horizontal cross member. These well-known coupling devices are cumbersome in use in that they consist of several loose pieces, in that they require placing of parts on the outside of the structural members, and in that they deform the structural members when tightened. In US—A—39 69 031 a coupling device is described where the coupling force is obtained between a screw in a pair of holes in one profile and claws which engage the other profile. These claws have inclined surfaces for engagement with inclined surfaces in the other profile so that tightening of the claws pulls the hollow structural members towards each other. However, the screw is subjected to friction which increases faster than the coupling force, as it is generated not only in the thread which establishes the coupling force but also between screw and hole which is transmitting the coupling force.

US—A—3 574 367 shows a clamping and a locking unit with two parts each. The two parts of the locking unit comprise complicated claws, and the two parts of the clamping unit are unsymmetrically built and expensive.

The disadvantages of the state of the art are avoided in a coupling device according to the invention obtaining a joint between the end of a first hollow structural member and the side of a second hollow structural member by means of at least one U-shaped claw part comprising a claw at each free end thereof. Said claw part is adapted to cooperate with formations on the second hollow member, as the coupling is obtained by squeezing the claw part by means of a fastener which is positioned in a hole in the first hollow member. The coupling device is further characterized by two substantially identical claw parts which are mutually connected by means of and pivotally mounted around the fastener and in that the coupling force is attained between the inside of the second member via holes in this member and edges of holes in the first member. These edges also function as a means to spread the claws apart when the claw parts are advanced within the first member towards the second member.

According to a preferred embodiment the coupling force is established directly between holes in the two hollow structural members. Preferably, the coupling device has inclined surfaces close to the tightening elements.

The invention is to be described in detail with reference to the drawing in which,

Fig. 1 shows two hollow structural members in part section seen from the broad side having claws according to claim 2 in operative position, and

Fig. 2 shows the same as seen from above, and

Fig. 3 shows two hollow structural members in part section seen from the broad side having claws according to claim 3 in operative position, and

Fig. 4 shows the same as seen from above.

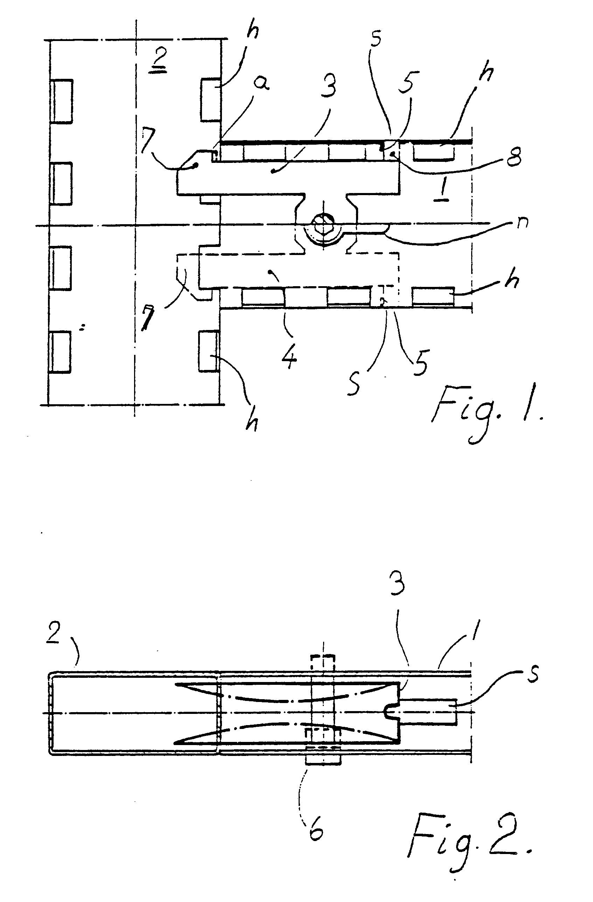

In Fig. 1 a first hollow structural member (1) is disposed as a horizontal cross member which is to be joined to a vertical hollow structural member (2). The two hollow structural members (1) and (2) are identical and both have holes (h) in the edges. In the present embodiment a regular placement of the holes (h) has been shown, and the holes are punched at the time of manufacture of the hollow structural members (1) and (2). However, utilization of the invention only requires 4 holes in the vertical structural member. The horizontal cross member (1) which contains the coupling device (3, 4) only requires two holes (s) in the narrow sides and a hole of oblong shape (n), shown as having key-hole shape in the figure, on each broad side of the cross member. The coupling device parts (3) and (4) each has two claws (7) which interact with the inside of the vertical structural member (2) as shown at (a), and a further claw (8) on each coupling device part (3) and (4) interacts with hole edges in the holes (s) which is shown at (5). The hole edges (5) may advantageously be reinforced by profiling or other deformation of the material in surrounding the holes.

The working of the coupling device according to the invention is the following: the two coupling device parts (3) and (4) are pulled to the right inside the horizontal cross member so that the two sets of claws (7) for interacting with the hollow structural member (2) are arranged opposite a set of four holes (h) in the structural member. Then the coupling device parts (3) and (4) are pushed to the left until the claws (8) which are to interact with the hole edges (5) in cross member (1) touch these edges, whereupon further movement to the left forces the claws (7) apart. When the tightening element—shown as a screw (6) in Fig. 2 according to claim 2—has reached the leftmost edge of the oblong hole (n) then the claws (7) have their maximum entry in the four holes in the structural member (2).

The distance between the inside of structural member (2) and a reinforced hole edge (5) in the structural member (1) is defined at manufacture of the holes in the structural members. The corresponding distance between claws (7) and (8) is similarly defined at manufacture of the coupling device (3, 4) and it is only slightly larger than the former distance. The force required between the hollow structural members (1) and (2) is obtained by squeezing together the central parts of the coupling device (3, 4), e.g. by tightening the screw (6) which acts in a direction perpendicular to the plane of Fig. 1.

The action may be explained in that the distance between the claws (7) and (8) becomes a chord in an arc which has the original distance as its length, and a chord is always shorter than the corresponding length of arc. This action is shown as a dot-and-dash line in Fig. 2. It is a simple matter for the person skilled in the art to calculate the force corresponding to a certain closure of the central parts, in that it is only dependent on material constants and geometric relations, and conversely coupling devices may be designed for use with existing structural members.

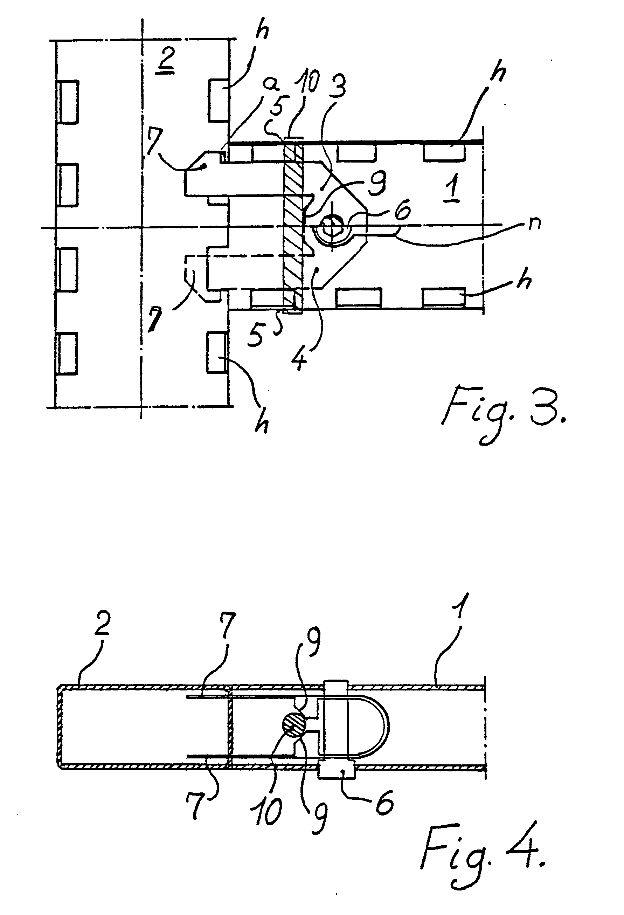

An embodiment according to claim 3 is shown in Figs. 3 and 4. In order to preserve clarity identical structural members as above are employed. The two claws (7) on the coupling device (3, 4) engage the insides of the second structural member (2) as shown at (a). Tightening of the screw (6) forces inclined surfaces (9) obtained by bending of the sheet material of the coupling device, to slide against a pin (10) which is disposed parallel to the second structural member (2). In Fig. 4 it is seen that the squeezing of the coupling device through the action of the screw (6) results in a pull to the right by the claws (7) which constitutes the desired force to join the two structural members. The pin (10) is given dimensions which correspond to the elasticity desired in the joint, i.e. its ability to return to normal position subsequent to an overload.

Each part of the coupling device has two claws (7), and the joint requires two coupling devices which engage each other in a scissor-like fashion. According to claim 4 the parts of the coupling device are identical, and they are brought into mutual engagement after turning one of them through 180° (a half-turn) about the axis of the structural member (1). The total of four holes for the screw (6) are lined up, the coupling device is pushed into one end of the horizontal cross member (1), and the screw (6) is mounted through the hole (n). The pin (10) according to claim 3 is then inserted.

## Claims

1. A coupling device for obtaining a joint between the end of a first hollow structural member (1) and the side of a second hollow structural member (2) by means of at least one U-shaped claw part comprising a claw (7) at each free end thereof, said claw part being adapted to cooperate with formations on the second hollow member (2), as the coupling is obtained by squeezing the claw part by means of a fastener (6) which is positioned in a hole in the first hollow member (1), characterised in that said device comprises two substantially identical claw parts (3, 4) which are mutually connected by means of and pivotally mounted around the fastener (6) and in that the coupling force is attained between the inside of the second member (2) via holes (h) in this member (2) and edges of holes (5) in the first member (1) which edges (5) also function as a means to spread the claws (7) apart when the claw parts (3, 4) are advanced within the first member (1) towards the second member (2).

2. A coupling device according to claim 1, characterized in that the claw parts (3, 4) comprise protrusions (8) for cooperation with holes (h) in the first hollow member (1) and that the coupling force is obtained by squeezing the central parts of the coupling device.

3. A coupling device according to claim 1 or 2, characterized in that the claw parts (3, 4) comprise a pin (10) to be transversely mounted in the first hollow member (1) and cooperating with inwardly protruding flaps on the sides turning against each other of the two claw parts (3 and 4), the flaps having inclined surfaces (9) for cooperation with the pin (10) during the coupling.

4. A coupling device according to any of claims 1 to 3, characterized in that, the claw parts (3, 4) are mounted in a symmetric fashion and that the tightening of the joint occurs by means of a single screw (6).

## Patentansprüche

1. Kupplungsvorrichtung zum Herstellen einer Verbindung zwischen dem Ende eines ersten strukturellen Hohlgliedes (1) und der Seite eines zweiten strukturellen Hohlgliedes (2) mit Hilfe mindestens eines U-förmigen Klauenteils mit einer Klaue (7) an jeder ihrer freien Enden, wobei das Klauenteil mit Abschnitten auf dem zweiten Hohlglied (2) zusammenwirkt, wobei die Verbindung erreicht wird durch Quetschen des Klauenteils mit Hilfe eines Befestigungsgliedes (6), das in einer Bohrung im ersten Hohlglied (1) angeordnet ist, dadurch gekennzeichnet, daß die Vorrichtung zwei im wesentlichen identische Klauenteile (3, 4) aufweist, die miteinander verbunden sind mit Hilfe des Befestigungsgliedes (6) und an diesem angelenkt sind, und daß die Kupplungskraft erhalten wird zwischen der Innenseite des zweiten Gliedes (2) über in diesem ausgebildete Bohrungen (h) sowie Bohrungsrändern (5) im ersten Glied (1), wobei die Ränder (5) ferner als Einrichtungen zum Aufspreizen der Klauen (7) dienen, wenn die Klauenteile (3, 4) innerhalb des ersten Gliedes (1) zum zweiten Glied (2) hin bewegt werden.

2. Kupplungsvorrichtung nach Anspruch 1, dadurch gekennzeichnet, daß die Klauenteile (3, 4) Vorsprünge (8) zum Zusammenwirken mit Bohrungen (h) im ersten Hohlglied (1) aufweisen und daß die Kupplungskraft erhalten wird durch Zusammendrücken der Mittelteile der Kupplungsvorrichtung.

3. Kupplungsvorrichtung nach Anspruch 1 oder 2, dadurch gekennzeichnet, daß die Klauenteile (3, 4) einen Zapfen (10) aufweisen, der in dem ersten Hohlglied (1) quer angeordnet ist und mit nach einwärts vorstehenden Lappen an den Seiten zusammenwirkt, die von den zwei Klauenteilen (3 und 4) zueinanderweisen, wobei die Lappen geneigte Flächen (9) zum Zusammenwirken mit dem Zapfen (10) während der Kupplung aufweisen.

4. Kupplungsvorrichtung nach einem der Ansprüche 1 bis 3, dadurch gekennzeichnet, daß die Klauenteile (3, 4) symmetrisch angeordnet sind und daß die Verbindung mit Hilfe einer einzigen Schraube (6) festgestellt wird.

**Revendications**

1. Dispositif d'accouplement pour l'obtention d'un joint entre l'extrémité d'un premier élément structurel creux (1) et le côté d'un second élément structurel creux (2) au moyen d'au moins une partie de mâchoire en forme de U comprenant une mâchoire (7) à chaque extrémité libre de celle-ci, ladite partie de mâchoire étant apte à coopérer avec des profils sur le second élément creux (2) lorsque l'accouplement est obtenu en comprimant la partie de mâchoire à l'aide d'un élément de fixation (6) qui est positionné dans un trou dans le premier élément creux (1), caractérisé en ce que ledit dispositif comprend deux parties de mâchoire (3, 4) sensiblement identiques qui sont reliées entre elles à l'aide de et montées de façon pivotante autour de l'élément de fixation (5) et en ce que la force d'accouplement est atteinte entre l'intérieur du second élément (2) via des trous (h) dans cet élément (2) et les bords des trous (5) dans le premier élément (1), bords (5) qui font également office de moyens d'écartement des mâchoires (7) lorsque les parties de mâchoire (3, 4) sont déplacées à l'intérieur du premier élément (1) en direction du second élément (2).

2. Dispositif d'accouplement selon la revendication 1, caractérisé en ce que les parties de mâchoire (3, 4) comprennent des sailles (8) en vue de la coopération avec des trous (h) dans le premier élément creux (1) et en ce que la force d'accouplement est obtenue en comprimant les parties centrales du dispositif d'accouplement.

3. Dispositif d'accouplement selon la revendication 1 ou 2, caractérisé en ce que les parties de mâchoire (3, 4) comprennent une broche (10) à monter transversalement dans le premier élément creux (1) et en coopération avec des languettes faisant saillie vers l'intérieur sur les côtés en opposition l'un de l'autre des deux parties de mâchoire (3 et 4), les languettes présentant des surfaces inclinées (8) pour la coopération avec la broche (10) lors de l'accouplement.

4. Dispositif d'accouplement selon l'une quelconque des revendications 1 à 3, caractérisé en ce que les parties de mâchoire (3, 4) sont montées d'une matière symétrique et en ce que le serrage du joint s'effectue au moyen d'une vis unique (6).

Fig. 1.

Fig. 2.

Fig. 3.

Fig. 4.